# EUROPÄISCHE PATENTSCHRIFT

(11) **EP 3 129 245 B1**
(45) Veröffentlichungstag und Bekanntmachung des Hinweises auf die Patenterteilung: **19.02.2020**
(21) Anmeldenummer: 15724180.3
(22) Anmeldetag: 09.04.2015
(51) Int. Cl.: B60G 7/00, B60K 5/12

(54) **LENKERELEMENT**
SUSPENSION LINK ELEMENT
ÉLÉMENT FORMANT UNE BIELLE

(30) Priorität: 11.04.2014 DE 102014207011
(43) Veröffentlichungstag der Anmeldung: 15.02.2017
(73) Patentinhaber: BOGE Elastmetall GmbH, 49401 Damme (DE)
(72) Erfinder: SCHARF, Jörg, 65558 Eppenrod (DE); PEISER, Henning, 38104 Braunschweig (DE); WURM, Karsten, 38442 Wolfsburg (DE)
(74) Vertreter: Bossmeyer, Jörg Peter
(86) Internationale Anmeldenummer: PCT/EP2015/057791
(87) Internationale Veröffentlichungsnummer: WO 2015/155319

(56) Entgegenhaltungen:
- EP-A2- 1 387 108
- DE-A1-102009 028 458
- DE-A1-102012 017 319
- DE-U1-202013 102 964

## Beschreibung

Die Erfindung betrifft ein Lenkerelement für ein Kraftfahrzeug gemäß dem Oberbegriff von Anspruch 1.

Gattungsgemäße Lenkerelemente dienen zur Kraftübertragung zwischen zwei Baugruppen und umfassen Pendelstützen, um Kräfte und/oder Bewegungen zwischen benachbarten Baugruppen zu übertragen, z.B. zwischen verschiedenen relativbeweglichen Baugruppen im Fahrwerk eines Kraftfahrzeugs. Mögliche Anwendungsfelder umfassen beispielsweise Pendelstützen zur Abstützung von Antriebsaggregaten (z.B. Motor/Getriebe) bei Kraftfahrzeugen gegenüber Chassis bzw. Karosserie, Pendelstützen zur Anlenkung von Federn, Dämpfern und/oder Stabilisatoren bei Fahrzeugachsen bzw. Einzelradaufhängungen, oder allgemein Pendelstützen zur Kopplung eines Karosseriebauteils mit einem Fahrwerksbauteil.

Ein derartiges Lenkerelement ist aus der DE 10 2009 028 458 A1 bekannt.

Die Ankopplung der Pendelstütze eines solchen Lenkerelements an die benachbarten Baugruppen erfolgt über Koppelelemente. Bei einem solchen Koppelelement kann es sich beispielsweise um ein Rundlager handeln, in das die Pendelstütze radial hineingesteckt wird. Ein Nachteil bekannter Konstruktionen besteht darin, dass die Anschläge in Zug- oder Schwenkrichtung relativ klein sind, was sich nachteilig auf den Komfort, insbesondere die Akustik, und/oder die Lebensdauer auswirken kann. Weiterhin ergibt sich durch die relativ kleinen Anschlagflächen eine relativ hohe Flächenpressung in diesem Bereich.

Die DE 20 2013 102 964 U1 offenbart eine Drehmomentstütze für eine Antriebsmaschine in einer Fahrzeugstruktur, umfassend einen mit der Antriebsmaschine koppelbaren Stützenkörper, welcher über ein Lager an die Fahrzeugstruktur anbindbar ist, wobei das Lager einen mit dem Stützenkörper verbindbaren Lagerkern sowie eine den Lagerkern zumindest bereichsweise umgreifende elastische Lagerbuchse besitzt, über welche der Stützenkörper gegenüber einem Anbindungsbereich der Fahrzeugstruktur abstützbar ist. Die Lagerbuchse weist eine Aussparung auf, durch welche hindurch ein Verbindungsabschnitt des Stützenkörpers zur Verbindung mit dem Lagerkern angeordnet werden kann.

Die EP 1 387 108 A2 beschreibt ein Radiallager, umfassend ein sich entlang einer Längsachse des Radiallagers erstreckendes, mit einem zu lagernden Körper über zumindest eine Momentstütze verbindbares, im Wesentlichen starres Innenteil und ein widerlagerbildendes, das Innenteil umgebendes, im Wesentlichen starres Außenteil und zumindest einen, das Innenteil mit dem Außenteil verbindenden elastischen Tragkörper, wobei das Innenteil im Wesentlichen in zur Längsachse senkrechter Richtung relativ zum Außenteil bewegbar ist. Das Außenteil weist zumindest eine erste Öffnung zur Hindurchführung der Momentstütze durch das Außenteil auf. Die EP 1 387 108 A2 offenbart den Oberbegriff des Anspruchs 1.

Es besteht die Aufgabe, ein Lenkerelement der eingangs beschriebenen Art zu schaffen, das diese Nachteile beseitigt oder zumindest abmindert.

Diese Aufgabe wird durch die im Anspruch 1 angegebene Erfindung gelöst. Vorteilhafte Ausgestaltungen sind den Unteransprüchen zu entnehmen.

Erfindungsgemäß ist ein Lenkerelement für ein Kraftfahrzeug geschaffen, umfassend eine Pendelstütze, ein Koppelelement zur Kopplung der Pendelstütze an eine Baugruppe des Kraftfahrzeugs, wobei das Koppelelement ein Gehäuse mit einem Durchlass umfasst, durch den sich die Pendelstütze in das Innere des Gehäuses erstreckt, und ein Anschlagschild zum Abstützen von über die Pendelstütze eingeleiteten Kräften gegenüber dem Koppelelement.

Bei dem Anschlagschild handelt es sich um ein Bauelement, das die Form eines Schildes aufweisen kann, und welches dazu dient, Schwenkbewegungen der Pendelstütze gegenüber dem Koppelelement abzudämpfen und zu begrenzen.

Die vorliegende Erfindung beruht auf der Erkenntnis, dass durch ein zusätzliches Bauteil, nämlich das Anschlagschild, die zur Verfügung stehende Anschlagfläche deutlich vergrößert werden kann. Durch die vergrößerte Anschlagfläche wird die Flächenpressung verringert. Weiterhin können zum Anschlag führende Bewegungen der Pendelstütze besser abgedämpft werden. Durch die beiden vorgenannten Maßnahmen erhöhen sich der Komfort und die Lebensdauer des Lenkerelementes und der angekoppelten Baugruppen.

In einer Ausgestaltung der Erfindung ist das Anschlagschild an der Pendelstütze angeordnet. Somit kann das Anschlagschild Bewegungen der Pendelstütze mitmachen.

In einer Ausgestaltung ist das Anschlagschild innerhalb des Gehäuses angeordnet, wobei das Anschlagschild zum Abstützen von Schwenkbewegungen der Pendelstütze gegenüber dem Koppelelement mit mindestens einem Gegenanschlag innerhalb des Gehäuses zusammenwirkt. In dieser Ausgestaltung erfordert das Anschlagschild keinen zusätzlichen Bauraum und ist somit kompakt ausführbar.

In einer Ausgestaltung weist das Anschlagschild eine Aussparung auf, in die die Pendelstütze aufnehmbar, insbesondere formschlüssig aufnehmbar ist. Diese Ausgestaltung gestattet eine einfache Montage des Anschlagschildes. Insbesondere kann das Anschlagschild auf einfache Weise auf die Pendelstütze gesteckt werden.

Anschließend kann die Pendelstütze auf herkömmliche Weise mit dem Koppelelement verbunden werden.

In einer Ausgestaltung ist das Koppelelement durch ein zylindrisches Rundlager gebildet, wobei das Anschlagschild die Form eines Zylinderwandabschnittes hat. Somit ist das Anschlagschild an die Form des Rundlagers angepasst, was eine kompakte Ausführung ermöglicht.

Erfindungsgemäß weist das Anschlagschild einen größeren Umfang oder eine größere Fläche als der Durchlass in dem Gehäuse auf, durch den die Pendelstütze in das Innere des Gehäuses des Koppelelementes verläuft. Dabei ist das Anschlagschild im Bereich des Durchlasses angeordnet. In dieser Ausgestaltung bildet das Anschlagschild eine Abdeckung für den Durchlass. Durch die Abdeckung des Durchlasses kann eine Verschmutzung im Innenraum des Koppelelementes reduziert werden.

Um unerwünschte Aufschlaggeräusche zu vermeiden, ist es zweckmäßig, wenn das Anschlagschild an der Innenseite des Gehäuses anliegt.

In einer Ausgestaltung ist das Anschlagschild aus Stahlblech, beispielsweise Federstahlblech, aus Aluminium oder aus Organoblech gebildet. Organoblech zeichnet sich durch ein geringes Gewicht aus und ist dennoch strapazierfähig. Unter Organoblech ist dabei ein Faser-Kunststoff-Verbundmaterial (FKV) in Form eines endlosfaserverstärkten thermoplastischen oder duroplastischen Kunststoffes zu verstehen. Dabei dienen als Glasfaser, Kohlefaser oder Aramidfaser bzw. Kevlar ausgebildete Verstärkungsfasern, insbesondere in Form von Endlosfasern, der Lastaufnahme. Zur Gewährleistung der Faserorientierung und der Formstabilität sind die vorgenannten Verstärkungsfasern in einen thermoplastischen Matrixwerkstoff (z.B. Polyamid, PA) eingebettet. Die in den Matrixwerkstoff eingebetteten Fasern können dabei in einer Richtung orientiert oder in einem beliebigen Winkel zueinander als Gewebe oder Gelege angeordnet sein.

Nachstehend ist anhand der Zeichnung ein Ausführungsbeispiel der Erfindung näher beschrieben. Es zeigt in schematisierter Darstellung:
Die Figur 1 eine perspektivische Ansicht verschiedener Teile eines Lenkerelementes nach einer Ausgestaltung der Erfindung;
die Figur 2 eine perspektivische Ansicht von Teilen des Lenkerelementes nach Figur 1 in zusammengebautem Zustand;
die Figuren 3a - 3d ein Anschlagschild für das Lenkerelement nach Figur 1 aus verschiedenen Perspektiven;
die Figur 4a eine Seitenansicht des Lenkerelementes nach Figur 1; und
die Figur 4b einen Querschnitt durch das Lenkerelement entlang der Linie A-A in Figur 4a.

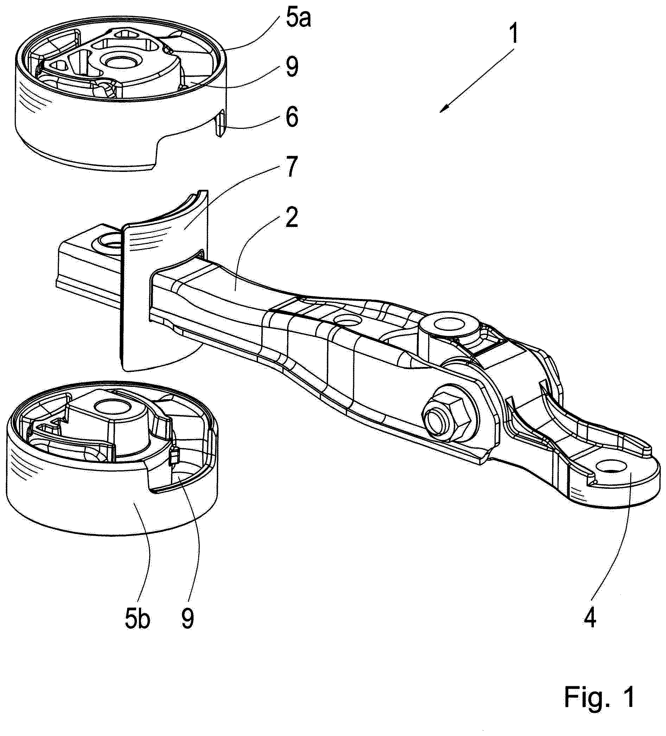

Die Figur 1 zeigt ein Lenkerelement 1 für ein Kraftfahrzeug nach einer Ausgestaltung der vorliegenden Erfindung. Das Lenkerelement 1 umfasst eine Pendelstütze 2, die an einem Ende mit einem ersten Koppelelement 3 koppelbar und am anderen Ende bereits mit einem zweiten Koppelelement 4 verbunden ist.

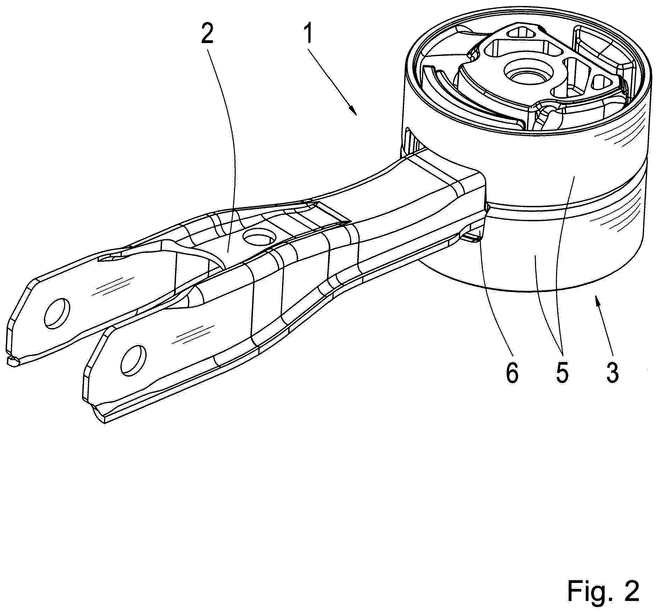

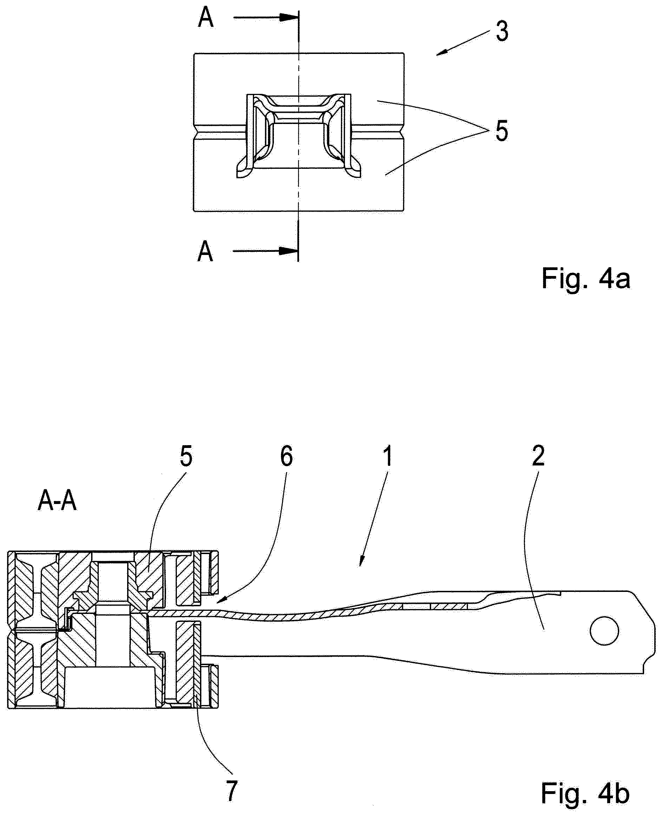

Wie in den Figuren 1 und 2 dargestellt, umfasst das erste Koppelelement 3 ein Gehäuse 5, das sich aus einem oberen Teil 5a und einem unteren Teil 5b zusammensetzt. In den Figuren 2, 4a und 4b sind die beiden Teile 5a und 5b miteinander verbunden. In diesem Zustand verläuft die Pendelstütze 2 durch einen Durchlass 6 in das Innere des Gehäuses 5 und ist dort mit dem Koppelelement 3 bewegbar verbunden. Die Bewegbarkeit kann dabei ein Schwenken, eine lineare Bewegung, eine Rotationsbewegung oder eine Kombination der vorgenannten Bewegungsarten umfassen.

Die Koppelelemente 3 und 4 können ihrerseits mit jeweiligen Baugruppen eines Kraftfahrzeugs verbunden werden.

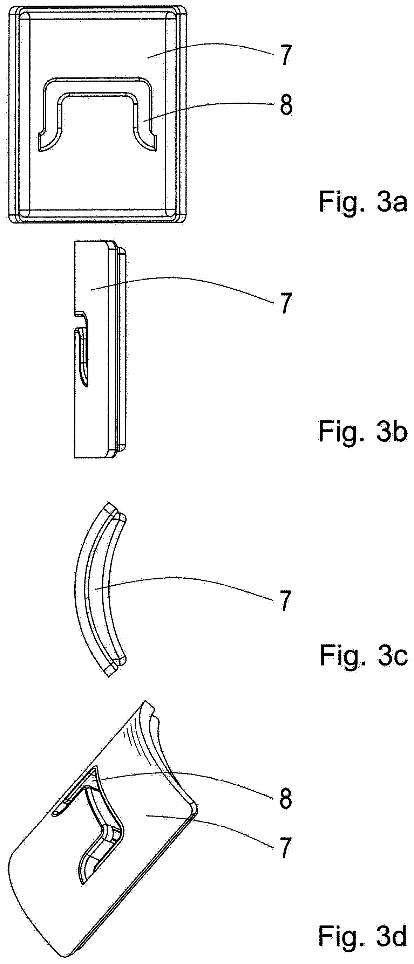

An der Pendelstütze 2 ist ein Anschlagschild 7 vorgesehen, welches dazu dient, Bewegungen der Pendelstütze 2 gegenüber dem Gehäuse 5 des Koppelelementes 3 abzustützen. Die Figuren 3a-3d zeigen das Anschlagschild aus verschiedenen Perspektiven. Das Anschlagschild 7 weist eine Aussparung 8 zur formschlüssigen Aufnahme der Pendelstütze 2 auf. Dementsprechend weist die Aussparung 8 einen dem Querschnitt der Pendelstütze 2 entsprechenden Umriss zuzüglich eines Montageund Entkopplungsspalts auf. Bei der gezeigten Ausgestaltung ist die Aussparung 8 im Wesentlichen U-förmig.

In dem in den Figuren 1 und 5 dargestellten zusammengebauten Zustand des Lenkerelementes 1 ist das Anschlagschild 7 im Inneren des Gehäuses angeordnet. Die Schwenkbewegung des Anschlagschildes 7 wird dabei durch Gegenanschläge 9 innerhalb des Gehäuses 5 begrenzt. Die Gegenanschläge 9 können beispielsweise durch in Bezug auf den Mittelpunkt des Gehäuses 5 radial verlaufende Wände gebildet sein.

Das Anschlagschild 7 hat die Form eines Zylinderwandabschnittes, wobei der Radius im Wesentlichen dem Radius der Außenwand des zylinderförmigen Gehäuses 5 entspricht. Im zusammengebauten Zustand ist das Anschlagschild 7 im Bereich des Durchlasses 6 angeordnet. Das Anschlagschild 7 bedeckt den Durchlass 6 teilweise oder ganz und kann somit den Innenraum des Gehäuses 5 gegenüber der Außenwelt abdecken.

Das Anschlagschild 7 kann aus Stahlblech, insbesondere Federstahlblech, oder aus Organoblech gefertigt sein.

### Bezugszeichen

- 1: Lenkerelement
- 2: Pendelstütze
- 3: Koppelelement
- 4: Koppelelement
- 5: Gehäuse
- 5a: oberes Gehäuseteil
- 5b: unteres Gehäuseteil
- 6: Durchlass
- 7: Anschlagschild
- 8: Aussparung
- 9: Gegenanschlag

## Patentansprüche

1. Lenkerelement (1) für ein Kraftfahrzeug, umfassend eine Pendelstütze (2), ein Koppelelement (3) zur Kopplung der Pendelstütze (2) an eine Baugruppe des Kraftfahrzeugs, wobei das Koppelelement (3) ein aus einem oberen Teil (5a) und einem unteren Teil (5b) zusammengesetztes Gehäuse (5) mit einem Durchlass (6) umfasst, durch den sich die Pendelstütze (2) in das Innere des Gehäuses (5) erstreckt, die dort mit dem Koppelelement (3) bewegbar verbunden ist, und ein zusätzliches Bauteil, nämlich ein Anschlagschild (7) zum Abstützen von über die Pendelstütze (2) eingeleiteten Kräften gegenüber dem Koppelelement (3), wobei das Anschlagschild (7) einen größeren Umfang oder eine größere Fläche aufweist als der Durchlass (6) in dem Gehäuse (5), **dadurch gekennzeichnet, dass** das Anschlagschild (7) im Bereich des Durchlasses (6) angeordnet ist und eine Abdeckung für den Durchlass (6) bildet.

2. Lenkerelement (1) nach Anspruch 1, **dadurch gekennzeichnet, dass** das Anschlagschild (7) an der Pendelstütze (2) angeordnet ist.

3. Lenkerelement (1) nach Anspruch 1 oder 2, **dadurch gekennzeichnet, dass** das Anschlagschild (7) innerhalb des Gehäuses (5) angeordnet ist und zum Abstützen von Schwenkbewegungen der Pendelstütze (2) gegenüber dem Koppelelement (3) mit mindestens einem Gegenanschlag (9) innerhalb des Gehäuses (5) zusammenwirkt.

4. Lenkerelement (1) nach einem der vorhergehenden Ansprüche, **dadurch gekennzeichnet, dass** das Anschlagschild (7) eine Aussparung (8) aufweist, in die die Pendelstütze (2) aufgenommen ist.

5. Lenkerelement (1) nach Anspruch 4, **dadurch gekennzeichnet, dass** die Pendelstütze (2) formschlüssig in die Aussparung (8) aufgenommen ist.

6. Lenkerelement (1) nach einem der vorhergehenden Ansprüche, **dadurch gekennzeichnet, dass** das Koppelelement (3) durch ein zylindrisches Rundlager gebildet ist und das Anschlagschild (7) die Form eines Zylinderwandabschnittes hat.

7. Lenkerelement (1) nach einem der vorhergehenden Ansprüche, **dadurch gekennzeichnet, dass** das Anschlagschild (7) an der Innenseite des Gehäuses (5) anliegt.

8. Lenkerelement (1) nach einem der vorhergehenden Ansprüche, **dadurch gekennzeichnet, dass** das Anschlagschild (7) aus Stahlblech, insbesondere Federstahlblech, aus Aluminium oder aus Organoblech gebildet ist.

9. Lenkerelement (1) nach einem der vorhergehenden Ansprüche, **dadurch gekennzeichnet, dass** das Anschlagschild (7) die Form eines Schildes aufweist, mittels welchem Schwenkbewegungen der Pendelstütze (2) gegenüber dem Koppelelement (3) abdämpfbar und begrenzbar sind.

10. Lenkerelement (1) nach einem der vorhergehenden Ansprüche, **dadurch gekennzeichnet, dass** das Anschlagschild (7) im Inneren des Gehäuses (5) angeordnet ist und eine Schwenkbewegung des Anschlagschildes (7) durch Gegenanschläge (9) innerhalb des Gehäuses (5) begrenzt wird, die durch in Bezug auf den Mittelpunkt des Gehäuses (5) radial verlaufende Wände gebildet sind.

11. Lenkerelement (1) nach Anspruch 3 oder 10, **dadurch gekennzeichnet, dass** das Anschlagschild (7) eine Aussparung (8) aufweist, durch welche sich die Pendelstütze (2) hindurch erstreckt.

12. Lenkerelement (1) nach Anspruch 4 oder 11, **dadurch gekennzeichnet, dass** die Aussparung (8) einen dem Querschnitt der Pendelstütze (2) entsprechenden Umriss zuzüglich eines Montage- und Entkopplungsspalts aufweist und im Wesentlichen U-förmig ist.

## Claims

1. Link element (1) for a motor vehicle, comprising a connecting rod (2) and a coupling element (3) for coupling the connecting rod (2) to a subassembly of the motor vehicle, wherein the coupling element (3) comprises a housing (5) consisting of an upper section (5a) and a lower section (5b), through which the connecting rod (2) extends into the interior of the housing (5) and which is movably connected there to the coupling element (3), and an additional component, namely a stop plate (7) for supporting forces transferred to the coupling element (3) by the connecting rod (2), and wherein the stop plate (7) has a larger circumference or a larger area than the passage (6) in the housing (5), **characterised in that** the stop plate (7) is arranged in the region of the passage (6) and forms a cover for the passage (6).

2. Link element (1) according to claim 1, **characterised in that** the stop plate (7) is arranged on the connecting rod (2).

3. Link element (1) according to claim 1 or 2, **characterised in that** the stop plate (7) is arranged inside the housing (5) and cooperates with at least one counter stop (9) inside the housing (5) for supporting pivoting movements of the connecting rod (2) relative to the coupling element (3).

4. Link element (1) according to any one of the preceding claims, **characterised in that** the stop plate (7) has an opening (8) in which the connecting rod (2) is accommodated.

5. Link element (1) according to claim 4, **characterised in that** the connecting rod (2) is positively accommodated in the opening (8).

6. Link element (1) according to any one of the preceding claims, **characterised in that** the coupling element (3) is formed by a cylindrical round bearing and the stop plate (7) has the shape of a cylinder wall portion.

7. Link element (1) according to any one of the preceding claims, **characterised in that** the stop plate (7) abuts the inside of the housing (5).

8. Link element (1) according to any one of the preceding claims, **characterised in that** the stop plate (7) is made of sheet steel, in particular spring sheet steel, aluminium or organic sheet.

9. Link element (1) according to any one of the preceding claims, **characterised in that** the stop plate (7) has the form of a shield, which serves to dampen and limit pivoting movements of the connecting rod (2) relative to the coupling element (3).

10. Link element (1) according to any one of the preceding claims, **characterised in that** the stop plate (7) is arranged inside the housing (5) and the pivoting movement of the stop plate (7) is limited by counter-stops (9) inside the housing (5), which are formed by walls extending radially with respect to the centre of the housing (5).

11. Link element (1) according to claim 3 or 10, **characterised in that** the stop plate (7) has an opening (8) through which the connecting rod (2) extends.

12. Link element (1) according to claim 4 or 11, **characterised in that** the opening (8) has an outline corresponding to the cross section of the connecting rod (2) plus a mounting and decoupling gap and is substantially U-shaped.

## Revendications

1. Élément de bielle (1) pour un véhicule automobile, comprenant un support pendulaire (2), un élément de couplage (3) pour le couplage du support pendulaire (2) à un sous-ensemble du véhicule automobile, l'élément de couplage (3) comprenant un boîtier (5), constitué d'une partie supérieure (5a) et d'une partie inférieure (5b), avec un passage (6) à travers lequel le support pendulaire (2) s'étend à l'intérieur du boîtier (5), qui y est relié de manière mobile avec l'élément de couplage (3), et un composant supplémentaire, à savoir un panneau de butée (7) pour le soutien de forces exercées par l'intermédiaire du support pendulaire (2) par rapport à l'élément de couplage (3), le panneau de butée (7) présentant une circonférence et une surface plus grandes que le passage (6) dans le boîtier (5), **caractérisé en ce que** le panneau de butée (7) est disposé au niveau du passage (6) et constitue un couvercle pour le passage (6).

2. Élément de bielle (1) selon la revendication 1, **caractérisé en ce que** le panneau de butée (7) est disposé sur le support pendulaire (2).

3. Élément de bielle (1) selon la revendication 1 ou 2, **caractérisé en ce que** le panneau de butée (7) est disposé à l'intérieur du boîtier (5) et interagit, pour le soutien des mouvements de pivotement du support pendulaire (2) par rapport à l'élément de couplage (3), avec au moins une contre-butée (9) à l'intérieur du boîtier (5).

4. Élément de bielle (1) selon l'une des revendications précédentes, **caractérisé en ce que** le panneau de butée (7) comprend un évidement (8) dans lequel le support pendulaire (2) est logé.

5. Élément de bielle (1) selon la revendication 4, **caractérisé en ce que** le support pendulaire (2) est logé par complémentarité de forme dans l'évidement (8).

6. Élément de bielle (1) selon l'une des revendications précédentes, **caractérisé en ce que** l'élément de couplage (3) est constitué d'un palier rond cylindrique et le panneau de butée (7) présente la forme d'une portion de paroi de cylindre.

7. Élément de bielle (1) selon l'une des revendications précédentes, **caractérisé en ce que** le panneau de butée (7) s'appuie contre l'intérieur du boîtier (5).

8. Élément de bielle (1) selon l'une des revendications précédentes, **caractérisé en ce que** le panneau de butée (7) est constitué d'une tôle d'acier, plus particulièrement d'une tôle d'acier ressort, d'aluminium ou d'une tôle organique.

9. Élément de bielle (1) selon l'une des revendications précédentes, **caractérisé en ce que** le panneau de butée (7) présente la forme d'un bouclier au moyen duquel les mouvements de pivotement du support pendulaire (2) par rapport à l'élément de couplage (3) peuvent être amortis et limités.

10. Élément de bielle (1) selon l'une des revendications précédentes, **caractérisé en ce que** le panneau de butée (7) est disposé à l'intérieur du boîtier (5) et un mouvement de pivotement du panneau de butée (7) est limité par des contre-butées (9) à l'intérieur du boîtier (5), qui sont constituées de parois s'étendant radialement par rapport au centre du boîtier (5).

11. Élément de bielle (1) selon la revendication 3 ou 10, **caractérisé en ce que** le panneau de butée (7) comprend un évidement (8) à travers lequel s'étend le support pendulaire (2).

12. Élément de bielle (1) selon la revendication 4 ou 11, **caractérisé en ce que** l'évidement (8) présente un contour correspondant à la section transversale du support pendulaire (2), plus un interstice de montage et de découplage et présente globalement une forme de U.
